(19) Europäisches Patentamt
European Patent Office
Office européen des brevets

(11) **EP 4 065 937 B1**

(12) **EUROPÄISCHE PATENTSCHRIFT**

(45) Veröffentlichungstag und Bekanntmachung des Hinweises auf die Patenterteilung:
**18.09.2024   Patentblatt 2024/38**

(21) Anmeldenummer: **20804211.9**

(22) Anmeldetag: **09.11.2020**

(51) Internationale Patentklassifikation (IPC):
**G01F 23/284** (2006.01)    **G01S 13/88** (2006.01)
**G01S 7/35** (2006.01)    **G01S 13/34** (2006.01)

(52) Gemeinsame Patentklassifikation (CPC):
**G01F 23/284; G01S 7/354; G01S 13/343; G01S 13/88**

(86) Internationale Anmeldenummer:
**PCT/EP2020/081439**

(87) Internationale Veröffentlichungsnummer:
**WO 2021/104839 (03.06.2021 Gazette 2021/22)**

(54) **FMCW-BASIERTES ABSTANDSMESSGERÄT**

FMCW-BASED DISTANCE MEASURING DEVICE

DISPOSITIF DE MESURE DE DISTANCE BASÉ SUR UNE FMCW

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2019   DE 102019132149**

(43) Veröffentlichungstag der Anmeldung:
**05.10.2022   Patentblatt 2022/40**

(73) Patentinhaber: **Endress+Hauser SE+Co. KG**
**79689 Maulburg (DE)**

(72) Erfinder:
• **MALINOVSKIY, Alexey**
**79689 Maulburg (DE)**
• **GORENFLO, Stefan**
**79688 Hausen (DE)**
• **FABER, Harald**
**79541 Lörrach (DE)**
• **VOGEL, Markus**
**79650 Schopfheim (DE)**
• **DAUFELD, Ghislain**
**68128 Village Neuf (FR)**

(74) Vertreter: **Koslowski, Christine Adelheid**
**Endress+Hauser Group Services**
**(Deutschland) AG+Co. KG**
**Colmarer Straße 6**
**79576 Weil am Rhein (DE)**

(56) Entgegenhaltungen:
EP-A1- 2 631 666          EP-A1- 3 339 881
WO-A2-2008/094172    DE-A1- 102009 002 785
DE-A1- 102011 007 372    US-A1- 2017 016 754

• **GONZALEZ MARIA C: "Improving range determination by digital filtering of FMCW radar", 2014 IEEE CONFERENCE ON ANTENNA MEASUREMENTS & APPLICATIONS (CAMA), IEEE, 16 November 2014 (2014-11-16), pages 1 - 4, XP032718333, DOI: 10.1109/CAMA.2014.7003401**

**Beschreibung**

Die Erfindung betrifft ein FMCW-basiertes Abstandsmessgerät.

In der Automatisierungstechnik, insbesondere zur Prozessautomatisierung werden vielfach Feldgeräte eingesetzt, die zur Erfassung diverser Messgrößen dienen. Bei der zu bestimmenden Messgröße kann es sich beispielsweise um einen Füllstand, einen Durchfluss, einen Druck, die Temperatur, den pH-Wert, das Redoxpotential, eine Leitfähigkeit oder den Dielektrizitätswert eines Mediums in einer Prozessanlage handeln. Zur Erfassung der entsprechenden Messwerte umfassen die Feldgeräte jeweils geeignete Sensoren bzw. basieren auf geeigneten Messprinzipien. Eine Vielzahl verschiedener Feldgeräte-Typen wird von der Firmen-Gruppe Endress + Hauser hergestellt und vertrieben.

Zur Füllstandsmessung von Füllgütern in Behältern haben sich Radar-basierte Messverfahren etabliert, da sie robust und wartungsarm sind. Dabei werden unter dem Begriff *"Behälter"* im Rahmen der Erfindung auch nicht-abgeschlossene Behältnisse, wie beispielsweise Becken, Seen oder fließende Gewässer verstanden. Ein zentraler Vorteil Radar-basierter Messverfahren besteht in der Fähigkeit, den Füllstand quasi kontinuierlich messen zu können. Im Kontext dieser Patentanmeldung bezieht sich der Begriff "*Radar*" auf Mikrowellensignale mit Frequenzen zwischen 0.03 GHz und 300 GHz. Übliche Frequenzbänder, bei denen Füllstandsmessung bzw. Abstandsmessung allgemein durchgeführt wird, liegen bei 2 GHz, 6 GHz, 26 GHz oder 79 GHz. Je höher das das Frequenzband gewählt ist, desto schmaler ist der Strahlkegel, in dem das Mikrowellensignal abgestrahlt wird, bzw. desto kleiner kann die Antenne ausgelegt werden.

Im Fall von Radar-basierter Füllstandsmessung bildet FMCW *("Frequency Modulated Continuous Wave")* ein etabliertes Messprinzip. Das Messprinzip beruht darauf, ein kontinuierliches Radar-Signal mit modulierter Frequenz auszusenden. Dabei liegt die Frequenz des Radar-Signals in einem festgelegten Frequenzband im Bereich einer standarisierten Mittenfrequenz. Kennzeichnend für FMCW ist hierbei, dass die Sende-Frequenz nicht konstant ist, sondern sich periodisch innerhalb des festgelegten Frequenzbandes ändert. Bei einer Mittenfrequenz von 79 GHz beträgt das Frequenzband beispielsweise 2 GHz, also von 78 GHz bis 80 GHz. Auch bei FMCW wird das Aussenden bzw. das Empfangen der Mikrowellensignale in aufeinanderfolgende Messzyklen gegliedert.

Die zeitliche Änderung der Frequenz ist bei FMCW standardmäßig linear und weist eine Sägezahn- beziehungsweise Dreiecks-Form auf. Eine Sinus-förmige Änderung kann prinzipiell jedoch auch umgesetzt werden. Dabei wird der Abstand zum Füllgut bzw. der Füllstand bei Implementierung des FMCW-Verfahrens auf Basis der instantanen Frequenzdifferenz zwischen dem aktuell empfangenen Radar-Signal und dem momentan ausgesendeten Radar-Signal bestimmt, indem durch Mischen der entsprechenden elektrischen Hochfrequenzsignale ein entsprechendes Auswertungssignal generiert wird. Dabei kann der Abstand anhand der Frequenz des Auswertungssignals ermittelt werden, da sich die Frequenz des Auswertungssignals proportional zum Abstand ändert. Näher beschrieben wird das Messprinzip von FMCW beispielsweise in *"Radar Level Detection, Peter Devine, 2000"*.

Gängiger Weise wird das Auswertungssignal im Anschluss mittels eines Analog-/DigitalWandlers digitalisiert, um zur Frequenz-Bestimmung eine Fourier-Transformation des Auswertungssignals durchführen zu können. Hierzu muss das Auswertungssignal in der Praxis Tiefpass-gefiltert werden, um hochfrequente Störanteile im Auswertungssignal zu entfernen. Dabei erfolgt die Tiefpass-Filterung vor Digitalisierung des Auswertungssignals, um Aliasing-Effekte bei der Digitalisierung zu unterbinden.

Analoge Filter mit hinreichender Filterschärfe sind mit entsprechend hoher Ordnungszahl, also mit entsprechend vielen kapazitiven oder induktiven Bauteilen auszulegen. Hierdurch ist die Realisierung von analogen Filtern jedoch zum einen sehr kostenintensiv. Zum anderen verringert sich die Robustheit des Filters bspw. gegenüber Bauteiltoleranzen und Temperatureinflüssen mit steigender Anzahl an kapazitiven oder induktiven Bauteilen. Dies verringert wiederum die potentielle Genauigkeit der Abstandsmessung. Insbesondere zur Füllstandsmessung ist jedoch zumindest im Falle des Tank-Gaugings eine sehr hohe Genauigkeit erforderlich. Die Patentanmeldung US 2017/0016754 A1 offenbart Beispiele für analoge Einheiten, die ein Vorschaltfilter umfassen, das aus einem analogen Filter zur Empfindlichkeitsfrequenzkontrolle (SFC) besteht, dem ohne Verstärker ein günstigerer Analog-DigitalWandler folgt. Mit dem SFC-Filter kann auch ein Anti-Aliasing-Filter vorgesehen werden, so dass eine Bandpass-Charakteristik erreicht wird. Alle Signalverarbeitungsschritte nach der Analog-Digital-Wandlung werden in einem digitalen Signalprozessor oder einem Mikrocontroller durchgeführt, der eine Fensterfunktion bereitstellt.

Der Erfindung liegt daher die Aufgabe zugrunde, ein kostengünstiges und robustes Füllstandsmessgerät zu entwickeln, dass eine hohe Genauigkeit erreicht.

Die Erfindung löst diese Aufgabe durch ein FMCW-Radar basiertes Abstandsmessgerät, das zur Messung eines Abstandes zu einem Objekt dient. Dabei umfasst das erfindungsgemäße Abstandsmessgerät zumindest:

- Eine Signalerzeugungs-Einheit, die ausgelegt ist,

  ◦ gemäß dem FMCW-Prinzip ein elektrisches Hochfrequenz-Signal zu erzeugen, und
  ◦ durch Mischen des Hochfrequenz-Signals mit einem Empfangssignal ein Auswertungssignal zu erzeugen,

- eine Antennen-Anordnung, mittels der das Hochfrequenz-Signal als Radar-Signal in Richtung des Objektes aussendbar und nach Reflektion am Objekt als entsprechendes Empfangssignal empfangbar ist,
- eine erste analoge Signalverarbeitungs-Einheit zur Verarbeitung des Auswertungssignals, mit einem jeweils in Reihe angeordneten

  ◦ ersten Analog-Hochpass, der als Filter erster Ordnung ausgelegt ist,
  ◦ ersten Verstärker, und
  ◦ ersten Analog-Tiefpass, der als Filter mit maximal vierter Ordnung ausgelegt ist,

- eine digitale Auswertungs-Einheit zur Verarbeitung des Auswertungssignals, wobei die digitale Auswertungs-Einheit hinter der analogen Auswertungs-Einheit angeordnet ist, mit

  ◦ einem ersten Analog-/Digital-Wandler, der ausgelegt ist, das von der analogen Signalverarbeitungs-Einheit verarbeitete Auswertungssignal mittels Überabtastung zu digitalisieren,
  ◦ einem ersten digitalen Tiefpass zur Filterung des Auswertungssignals,
  ◦ gegebenenfalls einem ersten Dezimator zur Dezimierung des digitalisierten Auswertungssignals,
  ◦ einem ersten digitalen Hochpass zur Filterung des ggf. dezimierten Auswertungssignals,
  ◦ einer Rechen-Einheit, die ausgelegt ist, anhand des digital gefilterten Auswertungssignals insbesondere mittels einer Fourier-Transformation den Abstand zu ermitteln.

Das erfindungsgemäße Abstandsmessgerät beruht also auf der Idee, neben der analogen Filterung auch eine digitale Filterung des Auswertungssignals durchzuführen. Der Vorteil einer zusätzlichen Digitalfilterung besteht darin, dass die Komplexität der analogen Signalverarbeitungs-Einheit vermindert werden kann, ohne dass die Filterung des Auswertungs-Signals beeinträchtigt wird. Die erfindungsgemäß vorgesehene Überabtastung erlaubt einfache analoge Filter und verbessert zudem das Signal-zu Rausch-Verhältnis. Hierdurch können auch Wandler mit lediglich 10 Bit oder 12 Bit, wie sie in gewöhnlichen Microcontrollern implementiert sind, eingesetzt werden. Die Funktion der analogen Filter beschränkt sich hierdurch auf etwaiges Anti-Aliasing im Auswertungssignal beim Digitalisieren, und auf Anpassung des analogen Auswertungssignals an den Dynamik-Bereich des Analog-/Digital-Wandlers.
Durch die zusätzliche digitale Filterung ist es somit möglich, die analogen Filter und den Analog-/Digital-Wandler mit sehr geringer Komplexität aufzubauen. So kann beispielsweise der erste Analog-Hochpass lediglich als Filter erster Ordnung ausgelegt werden. Der Analog-Tiefpass kann beispielsweise als Filter mit maximal vierter Ordnung ausgelegt werden, und/oder der Analog-/Digital-Wandler kann mit maximal 12 Bit ausgelegt werden. Hierdurch verringern sich der Platzverbrauch sowie die Kosten der analogen Bauteile. Zudem verringert sich die Temperaturabhängigkeit des Abstandsmessgerätes. Dennoch bleibt die potentiell hohe Abstandsauflösung erhalten.
Um die hohe Dämpfung von über 80 dB im Auswertungssignal einzustellen, kann der Tiefpassfilter beispielsweise als FIR-Filter mit Dezimator ausgelegt werden, wobei der Dezimator beispielsweise mit zumindest 70 Koeffizienten ausgelegt werden. Der erste digitale Hochpass kann als Filter mit zumindest zweiter Ordnung ausgelegt werden.
Im Rahmen dieser Erfindung definiert sich der Begriff *"Überabtastung"* in Bezug zum ersten Analog-/Digital-Wandler derart, dass die zur Abtastrate korrespondierende Nyquist-Frequenz selbst bei derjenigen Frequenz des Auswertungssignals, die zum maximal zu messenden Abstand korrespondiert, oberhalb der zum Abstand korrespondierenden Frequenz des Auswertungssignals liegt. Dies ist erfüllt, wenn die Abtastrate im Rahmen der Erfindung mindestens viermal eingestellt ist, wie diejenige Frequenz des Auswertungssignals, die zum maximal zu messenden Abstand korrespondiert.
In Bezug zum Füllstandsmessgerät wird unter dem Begriff *"Einheit"* im Rahmen der Erfindung prinzipiell jede elektronische Schaltung verstanden, die für den jeweiligen Bestimmungszweck geeignet ausgelegt ist. Es kann sich also je nach Anforderung um eine Analogschaltung zur Erzeugung bzw. Verarbeitung entsprechender analoger Signale handeln. Es kann sich jedoch auch um eine Digitalschaltung wie einem Microcontroller oder um ein Speichermedium in Zusammenwirken mit einem Programm handeln. Dabei ist das Programm ausgelegt, die entsprechenden Verfahrensschritte durchzuführen bzw. die notwendigen Rechenoperationen der jeweiligen Einheit anzuwenden. In diesem Kontext können verschiedene elektronische Einheiten des Füllstandsmessgerätes im Sinne der Erfindung potentiell auch auf einen gemeinsamen physikalischen Speicher zurückgreifen bzw. mittels derselben physikalischen Digitalschaltung betrieben werden.
Vorteilhaft weiterentwickelt werden kann das Abstandsmessgerät, indem die Signalerzeugungs-Einheit differentiell ausgelegt wird. In diesem Fall ist es entweder erforderlich, dass zumindest die erste analoge Signalverarbeitungs-Einheit die differentiellen Auswertungssignale verarbeiten kann, oder dass parallel zur ersten analogen-Signalverarbeitungs-Einheit eine zweite, baugleiche Signalverarbeitungs-Einheit angeordnet ist. In beiden Fällen muss die digitale Signalverarbeitungs-Einheit für die differentiellen Auswertungs-Signale ausgelegt sein. Dementsprechend muss entweder auch der erste Analog-/Digital-Wandler differentiell ausgelegt sein. Aus Kostengründen ist es jedoch vorteilhaft, wenn die digitale Signalverarbeitungs-Einheit einen zweiten, massebezogenen Analog-/Digital-Wandler umfasst, der parallel zum ersten massebezogenen Analog-/Digital-Wandler angeordnet und zu diesem synchronisiert ist. Hinter dem ersten Analog-/Digital-Wandler bzw. den beiden Analog-/Digital-Wandlern wird das differentielle Auswertungs-Signal an einem Summierpunkt mittels Subtraktion zusammengeführt und als nicht-differentielles Auswertungssignal weiterverarbeitet.

Vorteilhaft an differentieller Auslegung ist ein verringertes Quantisierungsrauschen und eine höhere Beständigkeit des Messgerätes gegenüber elektromagnetischen Störeinflüssen, auch unter dem Akronym *EMV* (bzw. *"Electromagnetic Compability, EMC"*) bekannt.

In einer weiteren Ausführungsvariante des erfindungsgemäßen Abstandsmessgerätes kann die Signalerzeugungs-Einheit zudem so ausgelegt sein, um das Auswertungssignal als zweiphasiges Signal mit einer Phasenverschiebung von 90 ° zueinander zu erzeugen. Bei dieser Variante ist das Abstandsmessgerät zur Verarbeitung der zweiten Phase beispielsweise um folgende Komponenten zu ergänzen:

- Eine zweite analoge Signalverarbeitungs-Einheit für die zweite Phase des Auswertungssignals, mit

  ○ einem zweiten Analog-Hochpass,
  ○ einem zweiten Verstärker, und
  ○ einem zweiten analogen Tiefpass.

Die digitale Auswertungs-Einheit muss in diesem Fall für die zweite Phase des Auswertungssignals korrespondierend zu den ursprünglichen Komponenten

- einen zweiten Analog-/Digital-Wandler,
- einen zweiten Dezimator, und
- einen zweiten digitalen Hochpass

umfassen. Vorteilhaft hieran ist, dass die Rechen-Einheit die zwei Phasen des Auswertungs-Signals quasi komplexwertig einer Fast Fourier Transformation unterziehen kann, wodurch wiederum die Empfindlichkeit der Abstandsmessung erhöht wird.

Gemäß der Aufgabe, die der Erfindung zugrunde liegt, bietet es sich insbesondere an, das erfindungsgemäße Abstandsmessgerätes gemäß einer der zuvor beschrieben Ausführungsvarianten als Füllstandsmessgerät oder auch als Dielektrizitätswert-Messgerät einzusetzen. Analog zu dem erfindungsgemäßen Abstandsmessgerät wird die Aufgabe, die Erfindung zugrunde liegt, außerdem durch Verfahren zum Betrieb des Messgerätes gemäß einer der zuvor beschrieben Ausführungsvarianten gelöst. Dementsprechend umfasst das Verfahren die folgenden Verfahrensschritte:

- Erzeugung eines gemäß dem FMCW-Prinzip Frequenz-modulierten elektrischen Hochfrequenz-Signals,
- Aussenden des Hochfrequenz-Signals als Radar-Signal in Richtung des Objektes,
- Empfang des reflektierten Radar-Signals als elektrisches Empfangssignal nach Reflektion an dem Objekt,
- Erzeugung eines Auswertungssignals durch Mischen des Empfangssignals mit dem Hochfrequenz-Signal,
- Verstärken und Filtern des analogen Auswertungssignals, wobei zumindest die zum Abstand korrespondierende Frequenz des Auswertungssignals durchgelassen wird,
- Digitalisieren des Auswertungssignals mittels Überabtastung,
- Filtern und ggf. Dezimieren des digitalisierten Auswertungssignals, wobei wiederum zumindest die zum Abstand korrespondierende Frequenz im Auswertungssignals durchgelassen wird, und
- Ermittlung des Abstandes bzw. des Dielektrizitätswertes anhand des digitalisierten und gefilterten Auswertungssignals, beispielsweise mittels einer (Fast-) Fourier Transformation.

Anhand der nachfolgenden Figuren wird die Erfindung näher erläutert. Es zeigt:

Fig. 1: Eine typische Anordnung eines Radar-basierten Füllstandsmessgerätes an einem Behälter,

Fig. 2: ein schaltungstechnischer Aufbau eines FMCW Radar-basierten Abstandsmessgerätes nach dem Stand der Technik,

Fig. 3: eine typische Signalerzeugungs-Einheit für FMCW-Radar,

Fig. 4: ein schaltungstechnischer Aufbau einer möglichen Ausführungsvariante des erfindungsgemäßen Abstandsmessgerätes, und

Fig. 5: ein schaltungstechnischer Aufbau einer weiteren Ausführungsvariante des erfindungsgemäßen Abstandsmessgerätes.

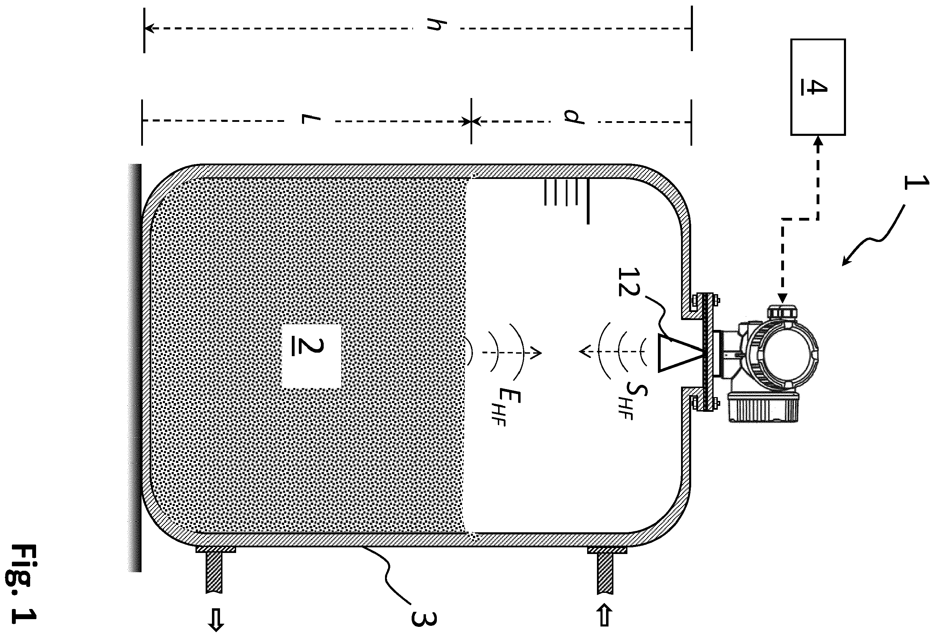

Zum grundsätzlichen Verständnis der Erfindung ist in Fig. 1 eine typische Anordnung eines frei abstrahlenden, Radar-basierten Füllstandsmessgerätes 1 an einem Behälter 3 gezeigt. In dem Behälter 3 befindet sich ein Füllgut 2, dessen Füllstand L durch das Füllstandsmessgerät 1 zu bestimmen ist. Dazu ist das Füllstandsmessgerät 1 oberhalb des maximal zulässigen Füllstands L am Behälter 3 angebracht. Je nach Einsatzgebiet kann die Höhe h des Behälters 3 zwischen 30 cm bis hin zu 125 m betragen.

In der Regel ist das Füllstandsmessgerät 1 über ein Bussystem, etwa "Ethernet", "PROFIBUS", "HART" oder "Wireless HART" mit einer übergeordneten Einheit 4, beispielsweise einem Prozessleitsystem oder einer dezentralen Datenbank verbunden. Hierüber können zum einen Informationen über den Betriebszustand des Füllstandsmessgerätes 1 kommuniziert werden. Über das Bussystem können jedoch auch Informationen über den Füllstand L übermittelt werden, um gegebenenfalls am Behälter 3 vorhandene Zu- oder Abflüsse zu steuern.

Da das in Fig. 1 dargestellte Füllstandsmessgerät 1 als frei abstrahlendes Radar-Messgerät ausgelegt ist, umfasst es eine entsprechende Sende-/Empfangs-Antenne 12. Dabei kann die Antenne 12, wie angedeutet, beispielsweise als Hornantenne ausgelegt sein. Unabhängig von der Bauform ist die Sende-/Empfangs-Antenne 12 so ausgerichtet, dass gemäß dem FMCW-Prinzip ein entsprechendes Radar-Signal $S_{HF}$ in Richtung des Füllgutes 3 ausgesendet wird.

An der Oberfläche des Füllgutes 3 wird das Radar-Signal $S_{HF}$ reflektiert und nach einer korrespondierenden Signallaufzeit von der Sende-/Empfangs-Antenne 12 entsprechend als elektrisches Empfangssignal $e_{HF}$ empfangen. Hierbei hängt die Signallaufzeit des Radar-Signals $S_{HF}$, $E_{HF}$ vom Abstand d = h - L des Füllstandsmessgerätes 1 zur Füllgut-Oberfläche ab.

Im Gegensatz zu der gezeigten Ausführungsvariante können anstelle einer einzigen Sende-/Empfangs-Antenne 12 auch zwei getrennte Antennen zum separaten Senden und Empfangen des Radar-Signals $S_{HF}$, $E_{HF}$ eingesetzt werden. Eine weitere Alternative besteht darin, eine elektrisch leitfähige Sonde, wie einen Hohlleiter oder ein Koaxialkabel, einzusetzen, die sich gen Behälterboden erstreckt. Bekannt ist diese Ausführungsvariante unter dem Begriff *"Geführtes Radar"*. Im Falle von geführtem Radar ist es mittels des Messgerätes 1 außerdem möglich, zusätzlich oder alternativ zum Abstand d bzw. dem Füllstand L anhand des Empfangssignals $e_{HF}$ den Dielektrizitätswert des Füllgutes 2 zu bestimmen.

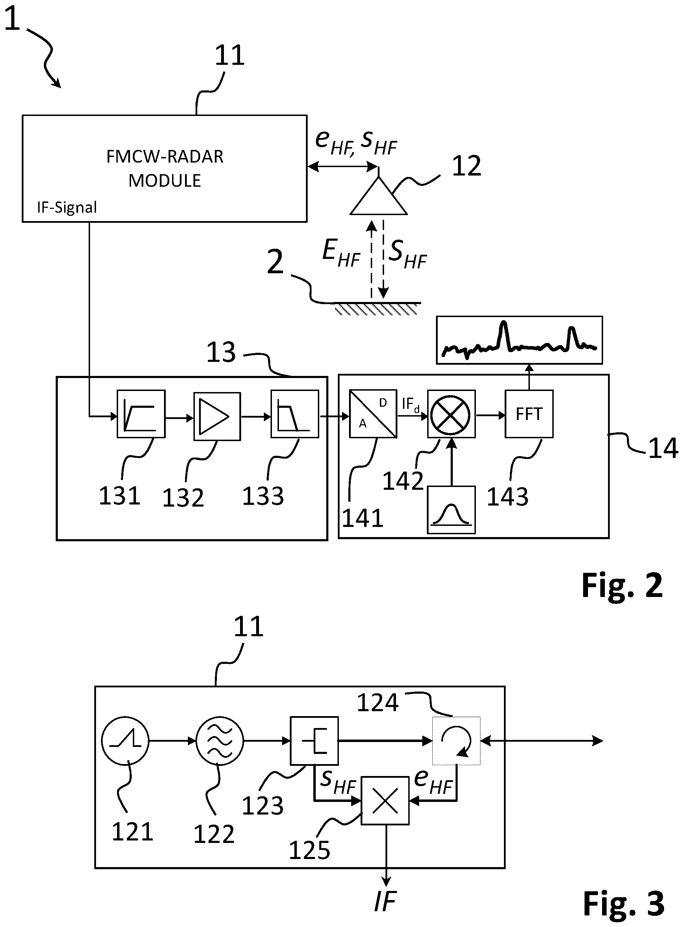

Der prinzipielle schaltungstechnische Aufbau eines bekannten, nach dem FMCW Verfahren arbeitenden Füllstands-Messgerätes 1 ist in Fig. 2 dargestellt: Zur Erzeugung des Radar-Signals $S_{HF}$ umfasst das Messgerät 1 eine Signalerzeugungs-Einheit 11, die ein entsprechendes elektrisches Hochfrequenz-Signal $s_{HF}$ generiert und der Antenne 12 zuführt. Dabei definiert die Frequenz des Hochfrequenz-Signals $s_{HF}$ die Frequenz des im Mikrowellenbereich liegenden Radar-Signals $S_{HF}$. Daher muss die Hochfrequenz-Signalerzeugungs-Einheit 11, 12 ausgelegt sein, um das elektrische Hochfrequenz-Signal $s_{HF}$ mit der bei FMCW erforderlichen, rampenförmigen Frequenzänderung zu erzeugen:
Bei einer rampenförmigen Frequenzänderung gemäß dem FMCW-Prinzip erhöht sich die Frequenz f periodisch wiederholt innerhalb eines vordefinierten Frequenzbandes Δf mit einer konstanten Änderungsrate. Dabei kann die Periodizität der einzelnen Frequenzrampen in einem Bereich von einigen 100 ms liegen. Die Dauer der einzelnen Rampe kann im Bereich zwischen 100 μs und 100 ms liegen. Die Lage des Frequenzbandes Δf ist unter Berücksichtigung regulatorischer Vorgaben einzustellen, weswegen als Frequenzband Δf vorzugsweise die ISM-Bänder bei 6 GHz, 26 GHz, 79 GHz oder 120 GHz implementiert sind. Die Bandbreite liegt je nach Lage des Frequenzbandes Δf insbesondere zwischen 0,5 GHz und 10 GHz.

Wie in Fig. 3 im Detail dargestellt ist, umfasst die Signalerzeugungs-Einheit 11 zur Erzeugung des Hochfrequenz-Signals $s_{HF}$ einen Hochfrequenz-Oszillator 122, der mittels einer Rampenerzeugungs-Einheit 121 geregelt wird. Die Regelung erfolgt dabei gemäß einer Phasenregelung (im englischen als *"Phase Locked Loop, PLL"* bekannt). Somit wird die Frequenz f des Hochfrequenz-Oszillators 122 einerseits gegenüber Schwankungen der Umgebungstemperatur stabilisiert. Andererseits wird hierüber die rampenförmige Frequenzänderung des Hochfrequenz-Signals $s_{HF}$ eingestellt.

Gemäß der Signalerzeugungs-Einheit 11 in Fig. 3 wird das elektrische Hochfrequenz-Signal $s_{HF}$ der Antenne 12 zum Aussenden über einen Signalteiler 123 und eine Sende-/Empfangsweiche 124 zugeführt.

Das eingehende Radar-Signal $E_{HF}$, das von der Füllgut-Oberfläche reflektiert ist, wird durch die Sende-/Empfangs-Antenne 12 in ein rein elektrisches Empfangs-Signal $e_{HF}$ zurückgewandelt und gegebenenfalls durch einen Empfangsverstärker der Signalerzeugungs-Einheit 11 verstärkt (nicht in Fig. 3 dargestellt). Das Empfangs-Signal $e_{HF}$ wird im Anschluss mittels eines Mischers 125 mit dem auszusendenden Hochfrequenz-Signal $s_{HF}$ gemischt, wobei das Hochfrequenz-Signal $s_{HF}$ hierfür aus dem Signalteiler 123 abgezweigt wird. Hierdurch wird ein beim FMCW-Verfahren typisches Auswertungssignal IF erzeugt, das die Basis zur Ermittlung des Abstandes d bzw. des Füllstandes L bildet. Dabei ist die Frequenz des Auswertungssignals IF gemäß dem FMCW-Prinzip proportional zum Abstand d.

Fig. 2 macht deutlich, dass die Frequenz des Auswertungssignals IF durch eine digitale Auswertungs-Einheit 14 des Abstandsmessgerätes 1 bestimmt wird. Hierzu digitalisiert ein erster Analog-/Digital-Wandler 141 der Auswertungs-Einheit 14 das Auswertungssignal IF. Um das Abtast-Theorem einzuhalten, tastet der erste Analog-/Digital-Wandler 141 mit etwas mehr als dem Doppeltem als die zum Abstand d korrespondierende Frequenz des Auswertungssignals IF ab. Somit kann eine entsprechend ausgelegte Rechen-Einheit 143 der Auswertungs-Einheit 14 das digitalisierte Auswertungssignal einer (Fast-) Fourier-Transformation, kurz FFT unterziehen. Dabei entspricht die Frequenz des globalen Maximums des entsprechenden FFT-Spektrums im Idealfall dem Abstand d. Zur Unterdrückung etwaiger unerwünschter Neben-Maxima, die durch die endliche Länge des Auswertungs-Signals IF entstehen, unterzeiht die Auswertungs-Einheit 14 dem digitalisierten Auswertungssignal $IF_d$ vor der Fourier-Transformation einer ersten Fensterung 142.

Wie in Fig. 2 dargestellt wird, ist der digitalen Auswertungs-Einheit 14 eine erste analoge Signalverarbeitungs-Einheit 13 zur Filterung des analogen Auswertungssignals IF vorgeschaltet. Zunächst wird das analoge Auswertungssignal IF hier einer analogen Hochpassfilterung 131 unterzogen, um primär so genanntes niederfrequentes "Klingeln" aus dem Nahbereich zu unterdrücken. Hierbei kann als analoger Filter beispielsweise ein Hochpass 131 erster Ordnung, also ein einzelner Kondensator, verwendet werden. Vorteilhaft an der Verwendung des ersten analogen Hochpasses ist außerdem, dass hierdurch der Analog-/Digital-Wandler 141 mit geringer Dynamik, bspw. mit maximal 12 Bit, ausgelegt werden kann. Nach anschließender Signal-Verstärkung mittels eines entsprechenden ersten Verstärkers 132 filtert ein erster analoger Tiefpass 133 der ersten analogen Signalverarbeitungs-Einheit 13 das Auswertungssignal IF. Zum einen wirkt dies dem Aliasing-Effekt beim nachfolgenden Digitalisieren des Auswertungssignals IF entgegen. Vor allem aber muss der erste analoge Tiefpass 133 mit einer hohen Ordnung von bspw. mindestens 8 ausgelegt sein, damit möglichst alle Frequenzen, die sich oberhalb der zum Abstand d korrespondierenden Frequenz des Auswertungssignals IF befinden, unterdrückt werden. Die zur Realisierung der hohen Ordnung notwendigen Impedanzen bzw. Kapazitäten des ersten analogen Tiefpasses 133 bewirken jedoch eine hohe Temperatur-Abhängigkeit und eine hohe Toleranz-Abhängigkeit bei der Filterung. Darüber hinaus ist die Realisierung des ersten analogen Tiefpasses 133 mit hoher Ordnung sehr kostenintensiv. Des Weiteren nimmt die Einschwingzeit und somit die erforderliche Mindest-Messzeit mit steigender Ordnung zu.

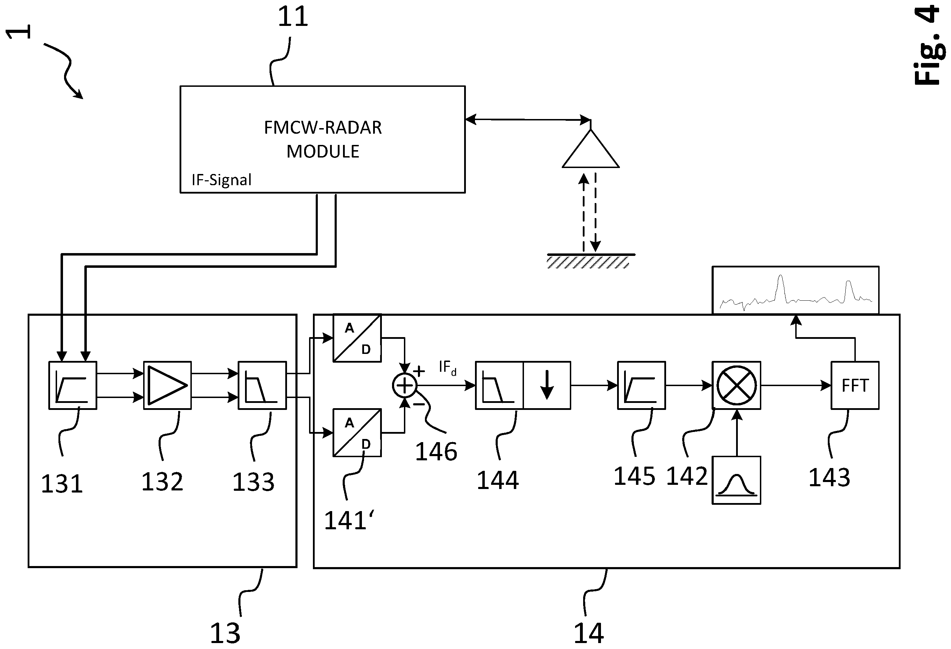

Ein erfindungsgemäßes, FMCW-basiertes Abstandsmessgerät 1, das lediglich einen analogen Tiefpass 133 mit geringer Ordnung wie beispielsweise dritter Ordnung erfordert, ist in Fig. 4 näher beschrieben: Im Vergleich zu dem in Fig. 2 dargestellten Messgerät 1 basiert es zusätzlichen auf einem ersten Dezimator 144 in der digitalen Auswertungs-Einheit 14, welcher einerseits eine digitale Tiefpassfilterung durchführt und gleichzeitig die Datenrate des digitalisierten Auswertungssignals $IF_d$ dezimiert. Hierbei gewährleistet der erste analoge Tiefpass 133 das Anti-Aliasing beim Digitalisieren des Auswertungssignals IF, während durch den ersten Dezimator 144 insgesamt die Frequenzen, die sich oberhalb der zum maximalen Abstand d korrespondierenden Frequenz des Auswertungssignals IF befinden, rausgefiltert werden. Um die Frequenzen $f_{IF}$ bis an die Nyquist-Frequenz der reduzierten Abtastrate zu nutzen, ist es entsprechend vorteilhaft, den Dezimator 144 mit zumindest 70 Koeffizienten auszulegen.

Bei der in Fig. 4 gezeigten Ausführungsvariante des erfindungsgemäßen Füllstandsmessgerätes 1 ist im Signalpfad des digitalisierten Auswertungssignals $IF_d$ hinter dem ersten Dezimator 144 in der digitalen Auswertungs-Einheit 14 zudem ein erster digitaler Hochpass 145 angeordnet. Dieser dient korrespondierend zum ersten analogen Hochpass 131 dazu, niederfrequente Frequenz-Anteile $f_{IF}$ im Auswertungssignal $IF_d$ zu filtern, die durch Geräte-internen Reflexionen in HF-Komponenten, wie der Antenne 12, hervorgerufen werden. Vorteilhaft ist hierbei die Auslegung als digitaler Hochpass 145 mit veränderbarer Ordnung (mindestens zweiter Ordnung) und einstellbarer Grenzfrequenz.

Damit der erste analoge Tiefpassfilter 133 auch trotz geringer Ordnung etwaiges Aliasing des ersten Analog-/Digital-Wandlers 141 verhindern kann, ist es im Rahmen der Erfindung essentiell, wenn der erste Analog-/Digital-Wandler 141 das Auswertungssignal IF in Bezug zu derjenigen Frequenz, die zum Abstand d des Objektes 3 korrespondiert, mittels Überabtastung digitalisiert. Das bedeutet, dass die Abtastrate r des Analog-/Digital-Wandlers 141 zwangsweise, also auch bei derjenigen Frequenz $f_{IF}$ des Auswertungssignals IF, die zum maximal zu messenden Abstand d korrespondiert, gemäß

$$r > 2 * f_{IF}$$

oberhalb der zum Abstand korrespondierenden Frequenz $f_{IF}$ des Auswertungssignals IF liegt. Hierdurch werden die Alias-Komponenten im digitalisierten Auswertungssignal $IF_d$ soweit unterdrückt, dass sie nach Filterung im Dezimator 144 unterhalb der Auflösungsgrenze liegen.

Die Signalerzeugungs-Einheit 11 der in Fig. 4 dargestellten Ausführungsvariante ist ausgelegt, das Auswertungssignal IF differentiell auszugeben. Korrespondierend hierzu sind der erste Analog-Hochpass 131, der erste Verstärker 132 und der erste Analog-Tiefpass 133 der ersten analogen Signalverarbeitungs-Einheit 13 bei der in Fig. 4 gezeigten Ausführungsvariante ebenfalls differentiell ausgelegt. Auch die digitale Auswertungs-Einheit 14 ist ausgelegt sind, um das Auswertungssignal IF differentiell zu verarbeiten. Hierzu umfasst die digitale Auswertungs-Einheit 14 parallel zum ersten Analog-/Digital-Wandler 141 einen zweiten Analog-/Digital-Wandler 141', wobei die beiden Wandler 141, 141' massebezogen und zueinander synchronisiert sind und den jeweiligen Phase des Auswertungs-Signals IF digitalisieren. Hinter den Analog-/Digital-Wandlern 141, 141' werden die beiden Komponenten des Auswertungs-Signals IF an einem Summierpunkt 146 mittels Subtraktion zusammengeführt. Vorteilhaft an einer differentiellen Auslegung ist, dass die Analog-/Digital-Wandlung mit quasi einem Bit zusätzlich durchgeführt wird, wodurch das Quantisierungsrauschen vermindert wird. Hierdurch erhöht sich die Empfindlichkeit der Abstandsmessung. Es können also weiter entfernte bzw. schlechter reflektierende Objekte 2 erfasst werden.

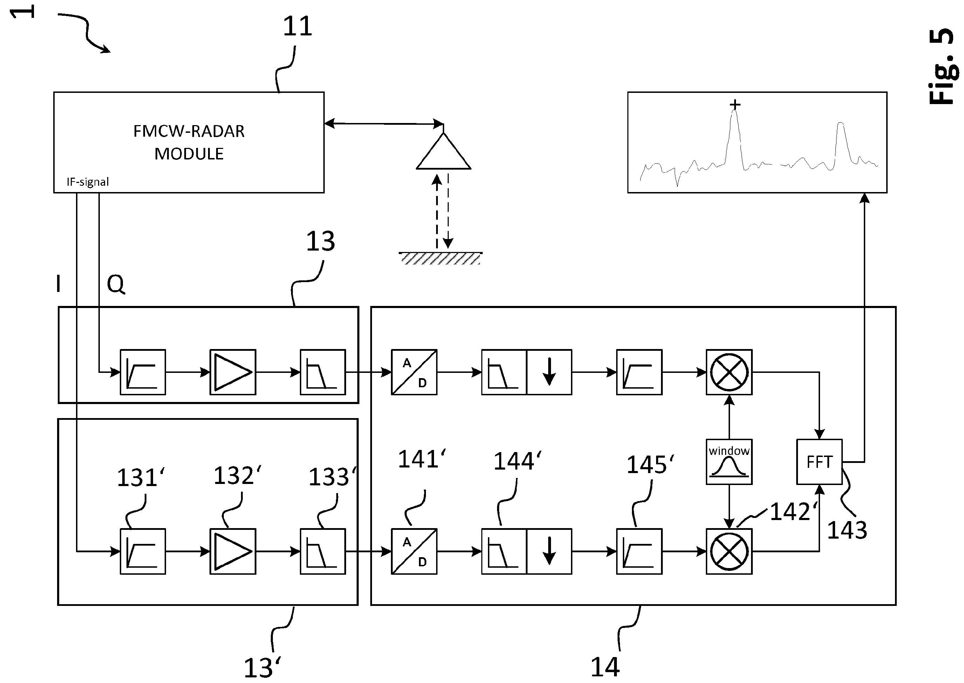

Eine nochmals erweiterte Ausführungsvariante des Abstandssmessgerätes 1 ist in Fig. 5 gezeigt: Bei dieser Ausführungsvariante ist die Signalerzeugungs-Einheit 11 ausgelegt, das Auswertungs-Signal IF zweiphasig I, Q mit einer Phasenverschiebung von jeweils 90° zueinander auszugeben. Hierzu umfasst die Signalerzeugungs-Einheit 11 einen Quadratur-Demodulator, der das Auswertungssignal IF als so genannte I- und Q-Komponente mit 90° Phasenverschiebung zueinander ausgibt. Zur Verarbeitung der zweiten Phase Q umfasst das Abstandsmessgerät 1 in diesem Fall eine zweite Signalverarbeitungs-Einheit 13', so dass die so genannte I-Phase und die Q-Phase des Auswertungs-Signals IF jeweils separat einer der beiden Signalverarbeitungs-Einheiten 13, 13' zugeführt werden. Wie in Fig. 5 zu erkennen ist, umfasst die digitale Auswertungs-Einheit 14 in diesem Fall für die zusätzliche Q-Phase des Auswertungs-Signals IF jeweils einen zweiten Analog-/Digital-Wandler 141', einen zweiten Dezimator 144' einen zweiten digitalen Hochpass 145' und eine zweite Fensterung 142'. Zusammengeführt werden die zwei Phasen I, Q des digitalisierten Auswertungssignals $IF_d$ in der Rechen-Einheit 143, wobei die Fast Fourier Transformation in diesem Fall entsprechend komplexwertig durchgeführt wird. Vorteilhaft an dieser komplexwertigen Auswertung ist, dass hierdurch wiederum die Empfindlichkeit der Abstandsmessung um ca. 3 dB erhöht wird.

Auch bei einer zweiphasigen Auslegung der Signalerzeugungs-Einheit 11 kann diese zudem so ausgelegt sein, dass jede der um 90 ° verschobenen Phasen I, Q wiederum differentiell ausgegeben wird. In diesem Fall sind die analogen Signalverarbeitungs-Einheiten 13, 13 und die digitale Signalverarbeitungs-Einheit 14 wiederum entsprechend differentiell auszulegen, wie im Zusammenhang mit Fig. 4 erläutert.

Es versteht sich von selbst, dass das im Zusammenhang mit Füllstandsmessung beschriebene Messgerät 1 selbstverständlich auch allgemein zur Abstandsmessung eingesetzt werden kann. Bei Realisierung des Messgerätes 1 auf Basis des geführten Radars, wenn also die Antenne 12 als in das Füllgut 2 eintauchende Sonde ausgeführt ist (nicht in Fig. 1 dargestellt), kann das Messgerät 1 auch zur Bestimmung des Dielektrizitätswertes des Füllgutes 2 herangezogen werden. In diesem Fall kann der Dielektrizitätswert wiederum mittels des digitalen Auswertungssignals $IF_d$ ermittelt werden, da die Sonden-Länge bekannt bzw. konstant ist.

**Bezugszeichenliste**

| | |
|---|---|
| 1 | Füllstandsmessgerät |
| 2 | Objekt/Füllgut |
| 3 | Behälter |
| 4 | Übergeordnete Einheit |
| 11 | Signalerzeugungs-Einheit |
| 12 | Antennen-Anordnung |
| 13, 13' | Analoge Signalverarbeitungs-Einheit |
| 14 | Digitale Auswertungs-Einheit |
| 121 | Rampenerzeugungs-Einheit |
| 122 | Hochfrequenz-Oszillator |
| 123 | Signalteiler |
| 124 | Sende-/Empfangsweiche |
| 125 | Mischer |
| 131 ,131' | Analog-Hochpass |
| 132 ,132' | Verstärker |
| 133 ,133' | Analog-Tiefpass |
| 141 ,141' | Analog-/Digital-Wandler |
| 142 ,142' | Fensterung |
| 143 | Rechen-Einheit |
| 144 ,144' | Tiefpass |
| 145 ,145' | Hochpass |
| 146 | Summierpunkt |
| d | Abstand |
| $E_{HF}$, $e_{HF}$ | Empfangenes Radar-Signal bzw. Empfangssignal |
| $f_{HF}$ | Frequenz des Hochfrequenz-Signals |
| $f_{IF}$ | Frequenz des Auswertungs-Signals |
| h | Einbauhöhe bzw. Messbereich |
| IF | Auswertungssignal |
| $IF_d$ | Digitalisiertes Auswertungssignal |
| L | Füllstand |
| r | Abtastrate des Analog-/Digital-Wandlers |
| $S_{HF}$, $s_{HF}$ | Radar-Signal bzw. Hochfrequenz-Signal |

**Patentansprüche**

1. FMCW-Radar basiertes Abstandsmessgerät zur Messung eines Abstandes (d) zu einem Objekt (2), umfassend:

    - Eine Signalerzeugungs-Einheit (11), die ausgelegt ist,

        ◦ gemäß dem FMCW-Prinzip ein elektrisches Hochfrequenz-Signal ($s_{HF}$) zu erzeugen, und
        ◦ durch Mischen des Hochfrequenz-Signals ($s_{HF}$) mit einem Empfangssignal ($e_{HF}$) ein Auswertungssignal (IF) zu erzeugen,

    - eine Antennen-Anordnung (12), mittels der das Hochfrequenz-Signal ($s_{HF}$) als Radar-Signal ($S_{HF}$) in Richtung des Objektes (2) aussendbar und nach Reflektion am Objekt (2) als entsprechendes Empfangssignal ($E_{HF}$) empfangbar ist,
    - eine erste analoge Signalverarbeitungs-Einheit (13) zur Verarbeitung des Auswertungssignals (IF), mit einem jeweils in Reihe angeordneten

        ◦ ersten Analog-Hochpass (131), der als Filter erster Ordnung ausgelegt ist,
        ◦ ersten Verstärker (132), und
        ◦ ersten Analog-Tiefpass (133), der als Filter mit maximal vierter Ordnung ausgelegt ist,

    - eine digitale Auswertungs-Einheit (14) zur Verarbeitung des Auswertungssignals (IF), wobei die digitale Auswertungs-Einheit (14) hinter der analogen Auswertungs-Einheit (13) angeordnet ist, mit

∘ einem ersten Analog-/Digital-Wandler (141), der ausgelegt ist, das von der analogen Signalverarbeitungs-Einheit (13) verarbeitete Auswertungssignal (IF) mittels Überabtastung zu digitalisieren,

∘ einem ersten digitalen Tiefpass (144) zur Filterung des Auswertungssignals ($IF_d$),

∘ einem ersten digitalen Hochpass (145) zur Filterung des Auswertungssignals ($IF_d$),

∘ einer Rechen-Einheit (143), die ausgelegt ist, anhand des gefilterten, digitalen Auswertungssignals ($IF_d$) insbesondere mittels einer Fourier-Transformation den Abstand (d) zu ermitteln.

**2.** Abstandsmessgerät nach Anspruch 1, wobei der Tiefpass (144) zur Dezimierung des digitalisierten Auswertungssignals ($IF_d$) als FIR-Filter mit integriertem Dezimator ausgelegt ist, wobei der Dezimator insbesondere mit zumindest 50 Koeffizienten ausgelegt ist, und/oder

wobei der erste digitale Hochpass (145) als Filter mit zumindest zweiter Ordnung ausgelegt ist.

**3.** Abstandsmessgerät nach einem der vorhergehenden Ansprüche,

wobei der Analog-/Digital-Wandler (141) mit maximal 12 Bit ausgelegt ist.

**4.** Abstandsmessgerät nach einem der vorhergehenden Ansprüche, wobei die Signalerzeugungs-Einheit (11) ausgelegt ist, das Auswertungssignal (IF) differentiell auszugeben.

**5.** Abstandsmessgerät nach Anspruch 4, wobei zumindest die erste analoge Signalverarbeitungseinheit (13) ausgelegt ist, um das Auswertungssignal (IF) differentiell zu verarbeiten, und wobei die digitale Signalverarbeitungs-Einheit (14) einen zweiten Analog-/Digital-Wandler (141') umfasst.

**6.** Abstandsmessgerät nach einem der vorhergehenden Ansprüche, wobei die Signalerzeugungs-Einheit (11) ausgelegt ist, das Auswertungssignal (IF) als zweiphasiges Signal (I, Q) mit einer Phasenverschiebung von 90 ° zueinander zu erzeugen, umfassend:

- Eine zweite analoge Signalverarbeitungs-Einheit (13') für die zweite Phase (Q) des Auswertungssignals (IF), mit

∘ einem zweiten Analog-Hochpass (131'),
∘ einem zweiten Verstärker (132'), und
∘ einem zweiten analogen Tiefpass (133')

wobei die digitale Auswertungs-Einheit (14) für die zweite Phase (Q) des Auswertungssignals (IF)

- einen zweiten Analog-/Digital-Wandler (141'),
- einen zweiten Dezimator (144'), und
- einen zweiten digitalen Hochpass (145') umfasst.

**7.** Verfahren zur FMCW Radar-basierten Messung eines Abstandes (d) zu einem Objekt (2) mittels des Abstandsmessgerätes (1) nach einem der vorhergehenden Ansprüche, folgende Verfahrensschritte umfassend:

- Erzeugung eines gemäß dem FMCW-Prinzip Frequenz-modulierten elektrischen Hochfrequenz-Signals ($s_{HF}$),
- Aussenden des Hochfrequenz-Signals ($s_{HF}$) als Radar-Signal ($S_{HF}$) in Richtung des Objektes (2),
- Empfang des reflektierten Radar-Signals ($E_{HF}$) als elektrisches Empfangssignal ($s_{HF}$) nach Reflektion an dem Objekt (2),
- Erzeugung eines Auswertungssignals (IF) durch Mischen des Empfangssignals ($e_{HF}$) mit dem Hochfrequenz-Signal ($s_{HF}$),
- Verstärken und Filtern des analogen Auswertungssignals (IF), wobei zumindest die zum Abstand (d) korrespondierende Frequenz des Auswertungssignals (IF) durchgelassen wird,
- Digitalisieren des Auswertungssignals (IF) mit einer Abtastrate, die mindestens viermal höher als die zum Abstand (d) korrespondierende Frequenz des Auswertungssignals (IF) ist,
- Filtern und Komprimieren des digitalisierten Auswertungssignals ($IF_d$), und
- Ermittlung des Abstandes (d) anhand des digitalisierten Auswertungssignals ($IF_d$), insbesondere mittels einer Fast Fourier Transformation.

**8.** Füllstandsmessgerät, umfassend ein Abstandsmessgerät (1) nach einem der Ansprüche 1 bis 6.

**9.** Verwendung des Messgerätes (1) nach einem der Ansprüche 1 bis 6 zur Messung eines Dielektrizitätswertes eines Füllgutes (2), wobei das Messgerät (1) eine Antenne (12) umfasst, welche als in das Füllgut (2) eintauchbare Sonde ausgeführt ist.

**Claims**

**1.** FMCW radar-based distance measuring device for measuring a distance (d) to an object (2), comprising:

- A signal generating unit (11) which is designed,

∘ generate a high-frequency electrical signal ($s_{HF}$) according to the FMCW principle, and
∘ by mixing the high-frequency signal ($s_{HF}$)

with a received signal (e $)_{HF}$ to generate an evaluation signal (IF),

- an antenna arrangement (12) by means of which the high-frequency signal ($s_{HF}$) can be emitted as a radar signal ($S_{HF}$) in the direction of the object (2) and, after reflection at the object (2), can be received as a corresponding received signal ($E_{HF}$),
- a first analog signal processing unit (13) for processing the evaluation signal (IF), with a first analog signal processing unit (13) arranged in series

  ○ first analog high-pass filter (131), which is designed as a first-order filter,
  ○ first amplifier (132), and
  ○ first analog low-pass filter (133), which is designed as a maximum fourth-order filter,

- a digital evaluation unit (14) for processing the evaluation signal (IF), the digital evaluation unit (14) being arranged downstream of the analog evaluation unit (13), with

  ○ a first analogue/digital converter (141) which is designed to digitize the evaluation signal (IF) processed by the analogue signal processing unit (13) by means of oversampling,
  ○ a first digital low-pass filter (144) for filtering the evaluation signal ($IF_d$),
  ○ a first digital high-pass filter (145) for filtering the evaluation signal ($IF_d$),
  ○ a computing unit (143) which is designed to determine the distance (d) using the filtered, digital evaluation signal ($IF_d$), in particular by means of a Fourier transformation.

2. Distance measuring device according to claim 1, wherein the low-pass filter (144) for decimating the digitized evaluation signal ($IF_d$) is designed as an FIR filter with integrated decimator, wherein the decimator is designed in particular with at least 50 coefficients, and/or wherein the first digital high-pass filter (145) is designed as a filter with at least second order.

3. Distance measuring device according to one of the preceding claims, wherein the analog/digital converter (141) is designed with a maximum of 12 bits.

4. Distance measuring device according to one of the preceding claims, wherein the signal generating unit (11) is designed to output the evaluation signal (IF) differentially.

5. Distance measuring device according to claim 4, wherein at least the first analog signal processing unit (13) is designed to process the evaluation signal (IF) differentially, and wherein the digital signal processing unit (14) comprises a second analog/digital converter (141').

6. Distance measuring device according to one of the preceding claims, wherein the signal generating unit (11) is designed to generate the evaluation signal (IF) as a two-phase signal (I, Q) with a phase shift of 90° to each other, comprising:

   - A second analog signal processing unit (13') for the second phase (Q) of the evaluation signal (IF), with

     ○ a second analog high-pass filter (131'),
     ○ a second amplifier (132'), and
     ○ a second analog low-pass filter (133')

   wherein the digital evaluation unit (14) for the second phase (Q) of the evaluation signal (IF)

     - a second analog/digital converter (141'),
     - a second decimator (144'), and
     - a second digital high-pass filter (145') includes.

7. Method for FMCW radar-based measurement of a distance (d) to an object (2) by means of the distance measuring device (1) according to one of the preceding claims, comprising the following method steps:

   - Generation of a frequency-modulated electrical high-frequency signal according to the FMCW principle ($s_{HF}$),
   - Transmitting the high-frequency signal ($s_{HF}$) as a radar signal ($S_{HF}$) in the direction of the object (2),
   - Reception of the reflected radar signal ($E_{HF}$) as an electrical received signal ($s_{HF}$) after reflection at the object (2),
   - Generation of an evaluation signal (IF) by mixing the received signal ($e_{HF}$) with the high-frequency signal ($s_{HF}$),
   - Amplification and filtering of the analog evaluation signal (IF), whereby at least the frequency of the evaluation signal (IF) corresponding to the distance (d) is passed,
   - Digitizing the evaluation signal (IF) with a sampling rate that is at least four times higher than the frequency of the evaluation signal (IF) corresponding to the distance (d),
   - Filtering and compressing the digitized evaluation signal ($IF_d$), and
   - Determination of the distance (d) using the digitized evaluation signal ($IF_d$ ), in particular by means of a Fast Fourier Transformation.

8. A level measuring device comprising a distance measuring device (1) according to any one of claims 1 to 6.

9. Use of the measuring device (1) according to one of claims 1 to 6 for measuring a dielectric value of a filling material (2), wherein the measuring device (1) comprises an antenna (12) which is designed as a probe which can be immersed in the filling material (2).

**Revendications**

1. Appareil de mesure de distance basé sur un radar FMCW pour mesurer une distance (d) par rapport à un objet (2), comprenant :

    - Une unité de génération de signaux (11) conçue pour

       ◦ de générer un signal électrique haute fréquence ($s_{HF}$ ) selon le principe FMCW, et
       ◦ générer un signal d'évaluation (IF) en mélangeant le signal haute fréquence ($s_{HF}$ ) avec un signal de réception (e )$_{HF}$ ,

    - un dispositif d'antenne (12) au moyen duquel le signal haute fréquence ($s_{HF}$ ) peut être émis en tant que signal radar ($S_{HF}$ ) en direction de l'objet (2) et peut être reçu, après réflexion sur l'objet (2), en tant que signal de réception correspondant ($E_{HF}$ ),
    - une première unité de traitement de signaux analogiques (13) pour le traitement du signal d'évaluation (IF), avec un capteur de température disposé respectivement en série et un capteur de pression disposé en parallèle.

       ◦ un premier filtre passe-haut analogique (131), qui est conçu comme un filtre du premier ordre,
       ◦ le premier amplificateur (132), et
       ◦ un premier filtre passe-bas analogique (133), conçu comme un filtre d'ordre quatre au maximum,

    - une unité d'évaluation numérique (14) pour le traitement du signal d'évaluation (IF), l'unité d'évaluation numérique (14) étant disposée derrière l'unité d'évaluation analogique (13), avec

       ◦ un premier convertisseur analogique/numérique (141) qui est conçu pour numériser le signal d'évaluation (IF) traité par l'unité de traitement de signal analogique (13) au moyen d'un suréchantillonnage,
       ◦ un premier filtre passe-bas numérique (144) pour filtrer le signal d'évaluation ($IF_d$ ),
       ◦ un premier filtre passe-haut numérique (145) pour filtrer le signal d'évaluation ($IF_d$ ),
       ◦ une unité de calcul (143) qui est conçue pour déterminer la distance (d) à l'aide du signal d'évaluation numérique filtré ($IF_d$ ), en particulier au moyen d'une transformation de Fourier.

2. Appareil de mesure de distance selon la revendication 1, dans lequel le filtre passe-bas (144) destiné à décimer le signal d'évaluation numérisé ($IF_d$ ) est conçu comme un filtre FIR avec décimateur intégré, le décimateur étant notamment conçu avec au moins 50 coefficients, et/ou dans lequel le premier filtre passe-haut numérique (145) est conçu comme un filtre d'au moins le deuxième ordre.

3. Appareil de mesure de distance selon l'une des revendications précédentes, le convertisseur analogique/numérique (141) étant conçu avec un maximum de 12 bits.

4. Appareil de mesure de distance selon l'une des revendications précédentes, dans lequel l'unité de génération de signal (11) est conçue pour émettre le signal d'évaluation (IF) de manière différentielle.

5. Appareil de mesure de distance selon la revendication 4, dans lequel au moins la première unité de traitement de signal analogique (13) est conçue pour traiter le signal d'évaluation (IF) de manière différentielle, et dans lequel l'unité de traitement de signal numérique (14) comprend un deuxième convertisseur analogique/numérique (141').

6. Appareil de mesure de distance selon l'une des revendications précédentes, dans lequel l'unité de génération de signal (11) est conçue pour générer le signal d'évaluation (IF) sous forme de signal biphasé (I, Q) avec un déphasage de 90° l'un par rapport à l'autre, comprenant :

    - Une deuxième unité de traitement de signal analogique (13') pour la deuxième phase (Q) du signal d'évaluation (IF), avec

       ◦ un deuxième filtre passe-haut analogique (131'),
       ◦ un deuxième amplificateur (132'), et
       ◦ un deuxième filtre passe-bas analogique (133')

    l'unité d'évaluation numérique (14) pour la seconde phase (Q) du signal d'évaluation (IF)

   - un deuxième convertisseur analogique/numérique (141'),
   - un deuxième décimateur (144'), et
   - un deuxième filtre passe-haut numérique (145')
comprend.

7. Procédé pour la mesure basée sur un radar FMCW d'une distance (d) par rapport à un objet (2) au moyen de l'appareil de mesure de distance (1) selon l'une des revendications précédentes, comprenant les étapes de procédé suivantes :

   - Génération d'un signal électrique haute fréquence modulé en fréquence selon le principe FMCW ($s_{HF}$),
   - l'émission du signal haute fréquence ($s_{HF}$) sous forme de signal radar ($S_{HF}$) en direction de l'objet (2),
   - réception du signal radar réfléchi ($E_{HF}$) en tant que signal de réception électrique ($s_{HF}$) après réflexion sur l'objet (2),
   - génération d'un signal d'évaluation (IF) en mélangeant le signal de réception ($e_{HF}$) avec le signal haute fréquence ($s_{HF}$),
   - l'amplification et le filtrage du signal d'évaluation analogique (IF), au moins la fréquence du signal d'évaluation (IF) correspondant à la distance (d) étant transmise,
   - numériser le signal d'évaluation (IF) à une fréquence d'échantillonnage qui est au moins quatre fois supérieure à la fréquence du signal d'évaluation (IF) correspondant à la distance (d),
   - le filtrage et la compression du signal d'évaluation numérisé ($IF_d$), et
   - détermination de la distance (d) à l'aide du signal d'évaluation numérisé ($IF_d$), en particulier au moyen d'une transformation de Fourier rapide.

8. Appareil de mesure de niveau, comprenant un appareil de mesure de distance (1) selon l'une des revendications 1 à 6.

9. Utilisation de l'appareil de mesure (1) selon l'une des revendications 1 à 6 pour la mesure d'une valeur diélectrique d'un produit de remplissage (2), l'appareil de mesure (1) comprenant une antenne (12) qui est réalisée sous forme de sonde pouvant être immergée dans le produit de remplissage (2).

**Fig. 1**

1

11

FMCW-RADAR
MODULE

IF-Signal

$e_{HF}, s_{HF}$

12

$E_{HF}$    $S_{HF}$

2

13

131    132    133

D

A

$IF_d$

141    142    143

14

**Fig. 2**

11

124

$s_{HF}$    $e_{HF}$

123

125

IF

121    122

**Fig. 3**

Fig. 4

Fig. 5

**IN DER BESCHREIBUNG AUFGEFÜHRTE DOKUMENTE**

**In der Beschreibung aufgeführte Patentdokumente**

- US 20170016754 A1